(19) Europäisches Patentamt
European Patent Office
Office européen des brevets

(11) **EP 2 267 480 B1**

(12) **EUROPEAN PATENT SPECIFICATION**

(45) Date of publication and mention
of the grant of the patent:
**13.03.2013 Bulletin 2013/11**

(51) Int Cl.:
***G01S 13/95*** *(2006.01)*     ***G01S 7/00*** *(2006.01)*

(21) Application number: **10164796.4**

(22) Date of filing: **02.06.2010**

(54) **Systems and methods for Gaussian decomposition of weather radar data for communication**

Systeme und Verfahren zur Gauss-Dekomposition von zu kommunizierenden Wetterradardaten

Systèmes et procédés pour la décomposition gaussienne de données radar météorologiques pour communication

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **08.06.2009 US 185086 P**
**25.03.2010 US 731998**

(43) Date of publication of application:
**29.12.2010 Bulletin 2010/52**

(73) Proprietor: **Honeywell International Inc.**
**Morristown, NJ 07962 (US)**

(72) Inventors:
• **Bunch, Brian Paul**
**Morristown, NJ 07962-2245 (US)**
• **Kirk, James Christopher**
**Morristown, NJ 07962-2245 (US)**
• **Zeng, Dongsong**
**Morristown, NJ 07962-2245 (US)**

(74) Representative: **Buckley, Guy Julian**
**Patent Outsourcing Limited**
**1 King Street**
**Bakewell**
**Derbyshire DE45 1DZ (GB)**

(56) References cited:
**US-A1- 2002 039 072**

• **MONTOPOLI M ET AL: "Maximum-Likelihood Retrieval of Modeled Convective Rainfall Patterns from Midlatitude C-Band Weather Radar Data" IEEE TRANSACTIONS ON GEOSCIENCE AND REMOTE SENSING, IEEE SERVICE CENTER, PISCATAWAY, NJ, US LNKD- DOI: 10.1109/TGRS.2007.896551, vol. 45, no. 7, 1 July 2007 (2007-07-01), pages 2403-2416, XP011186366 ISSN: 0196-2892**
• **OSTROVSKY Y P ET AL: "Use of Neural Network for Turbulence and Precipitation Classification Procedure" MATHEMATICAL METHODS IN ELECTROMAGNETIC THEORY, 2006 INTERNATIONAL CON FERENCE ON KHARKOV, UKRAINE 26-29 JUNE 2006, PISCATAWAY, NJ, USA,IEEE, PISCATAWAY, NJ, USA LNKD- DOI: 10.1109/MMET.2006.1689731, 26 June 2006 (2006-06-26), pages 161-163, XP010937116 ISBN: 978-1-4244-0490-2**

**Description**

**BACKGROUND OF THE INVENTION**

Currently, there is no ability for, or at least great difficulty for, a given aircraft to communicate its on-board weather radar data off the aircraft to other aircraft and/or centralized ground stations. One of the hurdles in communicating weather data acquired from an on-board has been the fairly large bandwidth requirements necessary to communicate the large amount of weather data involved and to support the rate at which the weather data can change as the on-board weather radar system acquires new weather information.

Article "Maximum-Likelihood Retrieval of Modeled Convective Rainfall Patterns from Midlatitude C-Band Weather Radar Data" (Montopoli, M et al, IEEE Transactions on Geoscience and Remote Sensing, July 2007, volume 45, issue 7, pages 2403 - 2416, ISSN: 0196-2892) discloses spatial characterization of the midlatitude meso-scale rain fields from C-band radar measurements performed by means of a systematic analysis and modeling of convective rain-cell bidimensional shapes and spatial correlation.

**SUMMARY OF THE INVENTION**

In accordance with the present invention, there is provided a method for transmitting compressed weather radar display data from a craft and a corresponding system accordance with the claims.

**BRIEF DESCRIPTION OF THE DRAWINGS**

Preferred and alternative embodiments of the present invention are described in detail below with reference to the following drawings:

FIGURE 1 is a block diagram of an embodiment of a weather data processing system;

FIGURES 2A-2D illustrate near-range radar reflectivity and turbulence data;

FIGURE 3 illustrates an exemplary process for decomposing the reflectivity data received from the weather radar system into multiple adaptive, three-dimensional Gaussian component functions; and

FIGURE 4 illustrates a graphical manipulation used by the present invention for calculation improvement.

**DETAILED DESCRIPTION OF ONE EMBODIMENT**

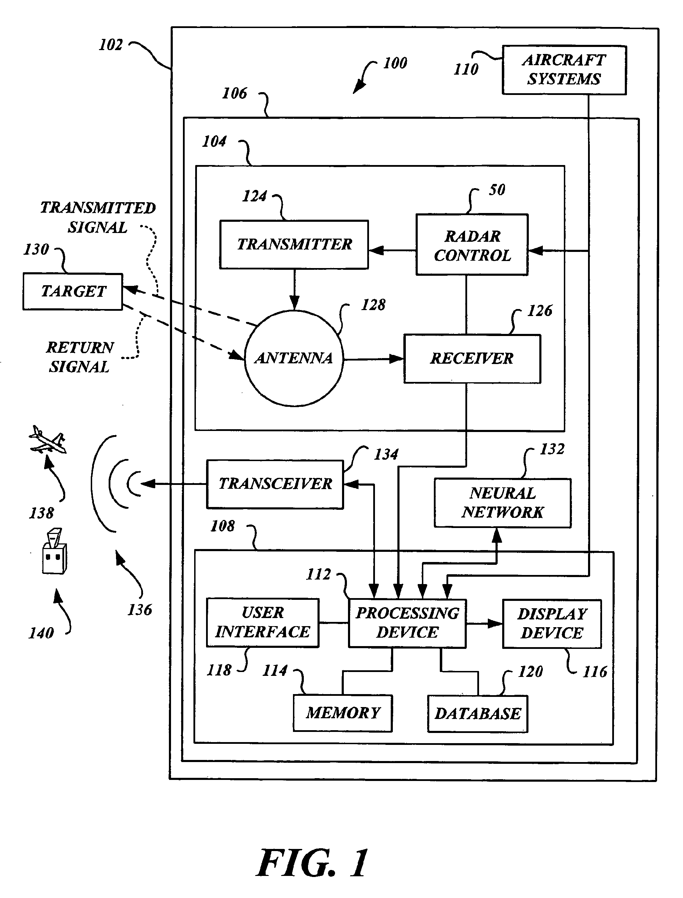

FIGURE 1 is a block diagram of an embodiment of a weather data processing system 100 residing in a craft 102, such as, but not limited to, an aircraft or maritime vessel. Embodiments of the weather data processing system 100 employ Gaussian decomposition to process the weather data received from a weather radar system 104. The Gaussian decomposition process facilitates weather radar picture smoothing and facilitates more efficient data linking for communicating the processed weather information to other aircraft and/or to ground stations. The picture-based weather data can be communicated over a relatively lower bandwidth communication channel or path. Prior art weather data communications systems have relatively larger bandwidth requirements that are necessary for communicating the relatively large amount of weather data and the rate at which the weather data can change.

A weather display system 106 includes a weather radar system 104 and a display/interface front-end 108. The weather display system 106 receives information from other aircraft systems 110, such as, but not limited to, accelerometers, global positioning systems (GPSs), and/or other sensor devices that sense various parameters in proximity to the craft 102 or various parameters relating to the craft 102, such as speed, direction, turbulence, altitude or the like.

The display/interface front-end 108 includes a processing device 112, a memory 114, a display device 116, a user interface 118, and an optional database 120. Any suitable processing device 112 may be used. In some embodiments, the processing device 112 is a special purpose processor system configured to process radar weather data received from the weather radar system 104. Alternatively, or additionally, the processing device 112 may perform other functionality.

The memory 114 is, in an exemplary embodiment, configured to serve as a working memory wherein logic for decomposing the received radar reflectivity data into multiple adaptive Gaussian component functions resides. The memory 114 may also store, either permanently or temporarily, the compressed weather radar display data that is generated based on the at least one selected parameter of the radar weather data.

The display device 116 is preferably a display device, such as a cathode ray tube, liquid crystal display, plasma screen, or other display device that presents weather information in graphical form to the crew of the craft 102. In some embodiments, the display device 116 may be configured to display the compressed weather radar display data for review and/or for verification by the crew or other viewers.

The user interface 118 is configured to receive input instructions from the crew of the craft 102. For example, the crew may instruct the processing device 112 to generate the compressed weather radar display data in a preferred format.

An example of the weather radar system 104 includes a radar controller 122 (configured to receive control instructions from the user interface 118), a transmitter 124, a receiver 126, and an antenna 128. The radar controller 122 controls the transmitter 124 and the receiver 126 for performing the sending and receiving of signals through the antenna 128. The weather radar system 104 and the display/interface front-end 108 are electronically and communicatively coupled to the other aircraft systems 110.

Radar relies on a transmission of a pulse of electromagnetic energy, referred to herein as a signal. The antenna 128 narrowly focuses the transmission of the signal pulse. Like the light from a flashlight, this narrow signal illuminates any objects in its path and illuminated objects reflect the electromagnetic energy back to the antenna 128.

Reflectivity data correspond to that portion of a radar's signal reflected back to the antenna 128 by liquids (e.g., rain) and/or frozen droplets (e.g., hail, sleet, and/or snow) residing in a weather object, such as a cloud or storm, or residing in areas proximate to the cloud or storm generating the liquids and/or frozen droplets.

The radar controller 122 calculates the distance of the weather object, such as an illustrated weather object 130, relative to the antenna 128 based upon the length of time the transmitted signal pulse takes in the transition from the antenna 128 to the weather object 130 and back to the antenna 128. The relationship between distance and time is linear as the velocity of the signal is constant, approximately the speed of light in a vacuum. Honeywell's® RDR-4000 airborne weather radar is a non limiting example weather radar that provides the radar reflectivity data and the short range Doppler radar information. Embodiments of the weather data processing system 100 may be implemented in any suitable weather radar system 104.

Additionally, an optional neural network 132 may be included that predicts turbulence data to forecast turbulence information beyond a 40 nautical mile (nm) range. Predicting turbulence information is based on the decomposed reflectivity data. In embodiments with the neural network 132, the database 120 may store information determined by the neural network 132 as it is trained. Additionally, or alternatively, the data base 120 may store the compressed weather radar display data.

The transceiver 134 is in signal communication with processing device 112 and is configured to receive the compressed weather radar display data from the processing device 112, and is configured to communicate a signal 136 from the craft 102 having the compressed weather radar display data therein. The signal may be received at another aircraft 138 and/or a ground station 140.

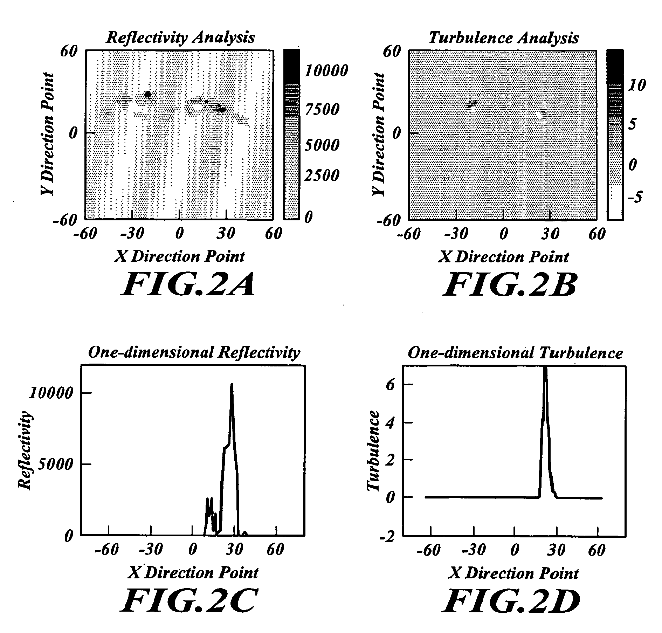

FIGURES 2A-D show actual radar reflectivity and turbulence data received and processed by the various embodiments. Although both reflectivity and turbulence data are three-dimensional, for visualization reasons, the data is presented in only one and two dimensions. FIGURES 2A and 2B show two-dimensional reflectivity and turbulence, respectively. FIGURES 2C and 2D show one-dimensional reflectivity and turbulence, respectively. From FIGURE 2C and 2D, it is observed that the reflectivity and turbulence data are all positive and look like the sum of multiple Gaussian functions.

In one embodiment, turbulence prediction systems and methods may use adaptive signal decomposition to reduce the amount of communicated weather data. Some embodiments may optionally employ a neural network's approach to forecast turbulence information beyond the 40 nm range. An exemplary method includes reflectivity signal decomposition and turbulence signal decomposition. The method decomposes the reflectivity data into multiple adaptive, three-dimensional Gaussian component functions, whose parameters, such as center position, amplitude, and dimensional standard deviations, are determined adaptively to maximally match the measured reflectivity. Performing the reflectivity signal decomposition includes using adaptive three-dimensional Gaussian base functions with unit energy. The turbulence data are decomposed into adaptive three-dimensional Gaussian base functions, with their parameters adjusted to maximally match the measured turbulence data.

With the decomposed reflectivity and turbulence components as input and output, backward propagation of the neural network is performed for learning the relationship between reflectivity and turbulence. The trained neural network is then used to predict the turbulence at an extended range where only reflectivity data are available. The adaptive signal decomposition method proposed herein may also be used for object tracking, e.g., weather/cloud tracking, bird flock tracking, aircraft tracking, etc.

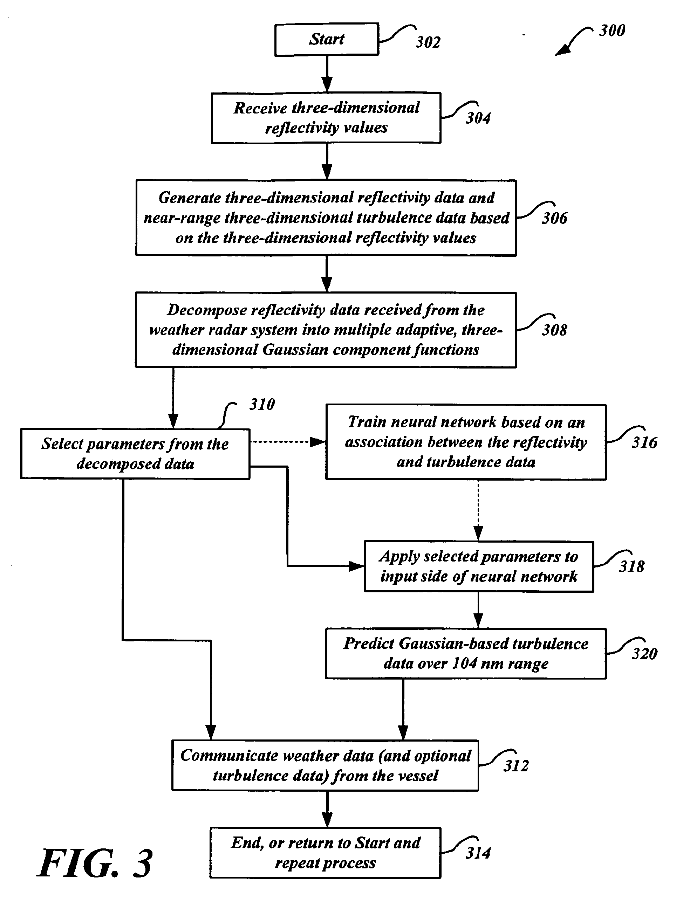

FIGURE 3 illustrates an exemplary process 300 that decomposes the reflectivity data received from the weather radar system 104 (FIGURE 1) into multiple adaptive, three-dimensional Gaussian component functions. The process starts at block 302. At block 304, three-dimensional reflectivity values are received from the weather radar system 104. At block 306, three-dimensional reflectivity data and near-range three-dimensional turbulence data based on the three-dimensional reflectivity values are generated. At block 308, a Gaussian decomposition of the three-dimensional reflectivity data and near-range three-dimensional turbulence data is performed. At block 310, parameters from the decomposed reflectivity data and the optional turbulence data are selected. These selected parameters are communicated from the craft 102 at block 312. At block 314, the process ends, or alternatively, returns to the start block 302 and repeats such that currently received radar data is processed and communicated.

As noted herein, some embodiments predict turbulence information beyond the 40 nm range using a neural network 132. In such embodiments, at the optional block 316, the neural network 132 is trained based on the received radar information by applying the selected parameters of an input side of the neural network 132. It is appreciated that this optional block may be bypassed after training of the neural network 132. At the optional block 318, parameters from the decomposed reflectivity data are selected. At the optional block 320, a Gaussian decomposition is performed on the predicted three-dimensional turbulence data. The process proceeds to block 312 such that the predicted turbulence information beyond the 40 nm range is communicated from the craft 102.

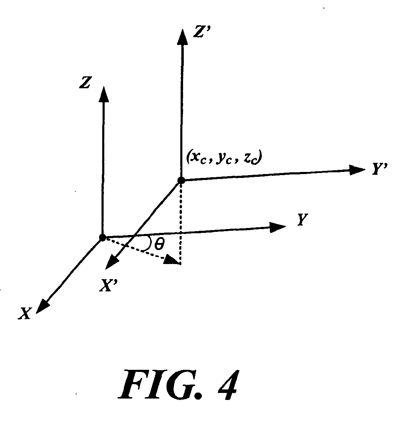

FIGURE 4 shows that, for the convenience of computation, a coordinate change may be necessary and includes moving the origin of the $xyz$ coordinates to point $(x_c, y_c, z_c)$ and clockwise rotating the $y$ coordinate $\theta$ results in new $x'y'z'$ coordinates.

The new coordinates after coordinate change are calculated as:

$$\begin{cases} x' = (x - x_c)\cos\theta - (y - y_c)\sin\theta \\ y' = (x - x_c)\sin\theta + (y - y_c)\cos\theta \\ z' = z - z_c \end{cases} \tag{1}$$

The rotation angle $\theta$ is calculated as:

$$\theta = \arctan\left(\frac{x_c{'}}{y_c{'}}\right) \tag{2}$$

The transform from new coordinates back to old coordinates is:

$$\begin{cases} x = x'\cos\theta + y'\sin\theta + x_c \\ y = -x'\sin\theta + y'\cos\theta + y_c \\ z = z' + z_c \end{cases} \tag{3}$$

**Adaptive Decomposition of Reflectivity:** The following equations show the adaptive decomposition of reflectivity. The three-dimensional Gaussian base function is proposed, as follows:

$$f(x', y', z') = \frac{1}{(2\pi)^{3/4}\sqrt{\sigma_x\sigma_y\sigma_z}} \exp\left(-\frac{x'^2}{4\sigma_x^{\ 2}} - \frac{y'^2}{4\sigma_y^{\ 2}} - \frac{z'^2}{4\sigma_z^{\ 2}}\right), \tag{4}$$

which has unit energy, i.e., $\iiint f^2(x',y',z')dx'dy'dz' = 1$. Placing equation (1) into equation (4), the three-dimensional Gaussian base function in $xyz$ coordinates is:

$$f(x,y,z) = \frac{1}{(2\pi)^{3/4}\sqrt{\sigma_x\sigma_y\sigma_z}} \exp\left(-\frac{[(x - x_c)\cos\theta - (y - y_c)\sin\theta]^2}{4\sigma_x^{\ 2}} - \frac{[(x - x_c)\sin\theta + (y - y_c)\cos\theta]^2}{4\sigma_y^{\ 2}} - \frac{(z - z_c)^2}{4\sigma_z^{\ 2}}\right)$$

$$\tag{5}$$

At initialization, the current reflectivity $r_1$ is set to the measured reflectivity data $r(x,y,z)$, i.e.,

$$r_1 = r(x, y, z) \tag{6}$$

The center position and dimensional deviations of the three-dimensional Gaussian base function are determined by solving the following optimization problem, where $\langle , \rangle$ means inner product.

$$\max_{f_1} \left| \langle r_1, f_1 \rangle \right|^2 \tag{7}$$

The amplitude of the Gaussian base function is calculated as:

$$A_{f1} = \langle r_1, f_1 \rangle \tag{8}$$

The first reflectivity component function $v_1$ is therefore:

$$v_1 = A_{f1} f_1 \tag{9}$$

Removing the first component function $v_1$ from the original reflectivity data $r_1$, a new reflectivity $r_2$ data is attained, i.e.,

$$r_2 = r_1 - A_{f1} f_1 \tag{10}$$

Repeating the above procedure for $N$ iterations, there become $N$ reflectivity component functions:

$$v_{kcom} \sim ( A_{fk} , x_{cfk} , y_{cfk} , z_{cfk} , \sigma_{xfk} , \sigma_{yfk} , \sigma_{zfk} ) \text{ for } k = 1, \cdots, N \tag{11}$$

The real measured data $r(x,y,z)$ is:

$$r = \sum_{k=1}^{N} A_{fk} f_k + r_{N+1} \tag{12}$$

It is interesting to note that the residual of the adaptive decomposition is always bounded. For continuous signal $r$, the residual will be reduced to zero as the number of iterations $N$ goes to infinity.

Ignoring the residual $r_{N+1}$, the $N$ component functions are used to approximate the reflectivity function as:

$$\hat{r} = \sum_{k=1}^{N} A_{fk} f_k \tag{13}$$

**Adaptive Decomposition of Turbulence:** The following equations show the adaptive decomposition of turbulence. The turbulence base function is proposed, as follows:

$$p(x', y', z') = \frac{y'}{(2\pi)^{3/4} \sigma_y \sqrt{\sigma_x \sigma_y \sigma_z}} \exp\left( -\frac{x'^2}{4\sigma_x^2} - \frac{y'^2}{4\sigma_y^2} - \frac{z'^2}{4\sigma_z^2} \right) \tag{14}$$

This turbulence base function also has unit energy, i.e., $\iiint p^2(x',y',z')dx'dy'dz'=1$. Placing equation (1) into equation (14), the turbulence base function in *xyz* coordinates is represented as:

$$p(x,y,z)=\frac{(x-x_c)\sin\theta+(y-y_c)\cos\theta}{(2\pi)^{3/4}\sigma_y\sqrt{\sigma_x\sigma_y\sigma_z}}\exp\left(\frac{[(x-x_c)\cos\theta-(y-y_c)\sin\theta]^2}{4\sigma_x^2}-\frac{[(x-x_c)\sin\theta+(y-y_c)\cos\theta]^2}{4\sigma_y^2}-\frac{(z-z_c)^2}{4\sigma_z^2}\right)$$

$$(15)$$

At initialization, the measured turbulence data $t(x,y,z)$ are assigned to the current turbulence $t_1$, i.e.,

$$t_1 = t(x,y,z) \qquad (16)$$

The parameters of the turbulence base function are determined by solving the following optimization problem.

$$\max_{p_1}|\langle t_1,p_1\rangle|^2 \qquad (17)$$

The amplitude of the turbulence base function is calculated as:

$$A_{p1}=\langle t_1,p_1\rangle \qquad (18)$$

The first turbulence component function $u_0$ is:

$$u_1 = A_{p1}p_1 \qquad (19)$$

Removing the first component function $u_1$ from the original turbulence data $t_1$, a new turbulence data $t_2$ is attained, i.e.,

$$t_2 = t_1 - A_{p1}p_1 \qquad (20)$$

Repeating the above procedure for $M$ iterations, $M$ component functions are:

$$p_{kcom} \sim (A_{pk},x_{cpk},y_{cpk},z_{cpk},\sigma_{xpk},\sigma_{ypk},\sigma_{zpk}) \text{ for } k=1,\cdots,M \qquad (21)$$

Ignoring the residual $t_{M+1}$, the $M$ component functions are used to reconstruct the turbulence function as:

$$\hat{t} = \sum_{k=1}^{M} A_{pk}p_k \qquad (22)$$

Upon receipt of the communicated information, the receiving aircraft and/or ground station re-generates the display data. In an exemplary embodiment, the display data is regenerated by using the communicated three-dimensional Gaussian parameters to generate the individual Gaussian functions based upon the above-described equation (15), and summing the Gaussian functions together. In embodiments that decomposes the display data using two-dimensional Gaussian parameters, the receiving aircraft and/or ground station re-generates the display data using two-dimensional Gaussian parameters.

Alternative embodiments decompose the reflectivity data received from the weather radar system 104 (FIGURE 1) into multiple adaptive, two-dimensional Gaussian component functions. That is, an alternative method decomposes the reflectivity data into multiple adaptive, two-dimensional Gaussian component functions, whose parameters, such as center position, amplitude, and/or dimensional standard deviations, are determined adaptively to maximally match the measured reflectivity. Performing the reflectivity signal decomposition includes using adaptive two-dimensional Gaussian base functions with unit energy. The turbulence data may be decomposed into adaptive two-dimensional Gaussian base functions, with their parameters adjusted to maximally match the measured turbulence data.

The embodiments of the invention in which an exclusive property or privilege is claimed are defined as follows:

## Claims

1. A method for communicating compressed weather radar display data from a craft (102) to other crafts and/or to ground stations, the method comprising:

   receiving in a processing device (112) radar, reflectivity data from an on-board weather radar system (104) configured to generate radar reflectivity data from the craft (102);
   decomposing the received radar reflectivity data into multiple adaptive Gaussian component functions;
   selecting a plurality of parameters, wherein the plurality of parameters comprise a center position, an amplitude, and a dimensional standard deviation,
   generating the compressed weather radar display data based on the selected parameters, and
   communicating the compressed weather radar display data from the craft (102).

2. The method of Claim 1, further comprising:

   receiving the compressed weather radar display data from the craft (102) at at least one of a ground station (140) and another aircraft (138);
   generating weather radar display data from the received compressed weather radar display data based upon the decomposed Gaussian component functions.

3. The method of Claim 1, wherein decomposing the received radar reflectivity data into multiple adaptive Gaussian component functions is based upon a three-dimensional Gaussian base function defined by:

$$f(x',y',z') = \frac{1}{(2\pi)^{3/4}\sqrt{\sigma_x \sigma_y \sigma_z}} \exp\left(-\frac{x'^2}{4\sigma_x^2} - \frac{y'^2}{4\sigma_y^2} - \frac{z'^2}{4\sigma_z^2}\right).$$

4. The method of Claim 1, wherein the received radar reflectivity data is three-dimensional radar reflectivity data, and further comprising:

   decomposing the received three-dimensional radar reflectivity data into multiple adaptive, three-dimensional Gaussian component functions.

5. The method of Claim 4, wherein the received three-dimensional radar reflectivity data is near-term three-dimensional radar reflectivity data and far-term three-dimensional radar reflectivity data beyond 40 nautical miles (nm), and further comprising:

   decomposing the near-term and for term three-dimensional radar reflectivity data into the multiple adaptive, three-dimensional Gaussian component functions;
   determining turbulence data from the near-term three-dimensional radar reflectivity data;
   decomposing the turbulence data into multiple adaptive, three-dimensional Gaussian component functions; and
   communicating the decomposed turbulence data.

6. A system operable to communicate compressed weather radar display data from a craft (102) to other crafts and/or to ground stations , the system comprising:

   an on-board weather radar system (104) configured to generate radar reflectivity data from weather objects (130);
   a processing device (112) in signal communication with the weather radar system (104), wherein the processing device (112) is configured to receive the radar reflectivity data from the weather radar system (104), to decompose the received radar reflectivity data into multiple adaptive Gaussian component functions, to select a plurality of parameters, wherein the plurality of parameters comprise a center position, an amplitude, and a dimensional standard deviation, to generate compressed weather radar display data based on the selected parameters, and a transceiver (134) in signal communication with the processing device (112), wherein the transceiver (134) is configured to receive the compressed weather radar display data from the processing device (112) and to communicate the compressed weather radar display data from the craft (102).

7. The system of Claim 6, further comprising:

a neural network (132),
wherein the processing device (112) is further configured to train the neural network (132) to predict far-term turbulence information based on near-term radar reflectivity data used to determine near-term turbulence, and based on far-term radar reflectivity data, and wherein the predicted turbulence data is communicated from the craft (102).

8. The system of Claim 7,
wherein the processing device (112) is further configured to:

decompose radar reflectivity data at near-term distances into multiple adaptive, three-dimensional Gaussian component functions corresponding to weather information and turbulence information; and
decompose the turbulence data at far-term distances into multiple adaptive, three-dimensional Gaussian component functions, and

wherein the neural network (132) predicts the turbulence information at the far-term distances based upon the determined far-term multiple adaptive, three-dimensional Gaussian component functions.

## Patentansprüche

1. Verfahren zum Übermitteln von komprimierten Wetterradar-Anzeigedaten von einem Flugzeug (102) zu anderen Flugzeugen und/oder Bodenstationen, wobei das Verfahren Folgendes umfasst:

Empfangen von Radarreflektivitätsdaten in einer Verarbeitungseinrichtung (112) von einem Onboard-Wetterradarsystem (104), das dafür ausgelegt ist, Radarreflektivitätsdaten von dem Flugzeug (102) zu erzeugen;
Zerlegen der empfangenen Radarreflektivitätsdaten in mehrere adaptive Gaußsche Komponentenfunktionen;
Auswählen mehrerer Parameter, wobei die mehreren Parameter eine Mittenposition, eine Amplitude und eine dimensionsbezogene Standardabweichung umfassen,
Erzeugen der komprimierten Wetterradar-Anzeigedaten auf der Basis der ausgewählten Parameter und
Übermitteln der komprimierten Wetterradar-Anzeigedaten von dem Flugzeug (102).

2. Verfahren nach Anspruch 1, ferner umfassend:

Empfangen der komprimierten Wetterradar-Anzeigedaten von dem Flugzeug (102) in einer Bodenstation (140) und/oder einem anderen Flugzeug (138);
Erzeugen von Wetterradar-Anzeigedaten aus den empfangenen komprimierten Wetterradar-Anzeigedaten auf der Basis der zerlegten Gaußschen Komponentenfunktionen.

3. Verfahren nach Anspruch 1, wobei das Zerlegen der empfangenen Radarreflektivitätsdaten in mehrere adaptive Gaußsche Komponentenfunktionen auf einer dreidimensionalen Gaußschen Basisfunktion basiert, definiert durch:

$$f(x', y', z') = \frac{1}{(2\pi)^{3/4} \sqrt{\sigma_x \sigma_y \sigma_z}} \exp\left( -\frac{x'^2}{4\sigma_x^2} - \frac{y'^2}{4\sigma_y^2} - \frac{z'^2}{4\sigma_z^2} \right).$$

**4.** Verfahren nach Anspruch 1, wobei die empfangenen Radarreflektivitätsdaten dreidimensionale Radarreflektivitätsdaten sind, und ferner umfassend:

Zerlegen der empfangenen dreidimensionalen Radarreflektivitätsdaten in mehrere adaptive dreidimensionale Gaußsche Komponentenfunktionen.

**5.** Verfahren nach Anspruch 4, wobei die empfangenen dreidimensionalen Radarreflektivitätsdaten kurzfristige dreidimensionale Radarreflektivitätsdaten und langfristige dreidimensionale Radarreflektivitätsdaten jenseits 40 Seemeilen (nm) sind, und ferner umfassend:

Zerlegen der kurzfristigen und langfristigen dreidimensionalen Radarreflektivitätsdaten in die mehreren adaptiven dreidimensionalen Gaußschen Komponentenfunktionen;
Bestimmen von Turbulenzdaten aus den kurzfristigen dreidimensionalen Radarreflektivitätsdaten;
Zerlegen der Turbulenzdaten in mehrere adaptive dreidimensionale Gaußsche Komponentenfunktionen; und
Übermitteln der zerlegten Turbulenzdaten.

**6.** System, das betreibbar ist, um komprimierte Wetterradar-Anzeigedaten von einem Flugzeug (102) zu anderen Flugzeugen und/oder Bodenstationen zu übermitteln, wobei das System Folgendes umfasst:

ein Onboard-Wetterradarsystem (104), das dafür ausgelegt ist, Radarreflektivitätsdaten aus Wetterobjekten (130) zu erzeugen;
eine Verarbeitungseinrichtung (112) in Signalkommunikation mit dem Wetterradarsystem (104), wobei die Verarbeitungseinrichtung (112) dafür ausgelegt ist, die Radarreflektivitätsdaten von dem Wetterradarsystem (104) zu empfangen, die empfangenen Radarreflektivitätsdaten in mehrere adaptive Gaußsche Komponentenfunktionen zu zerlegen, mehrere Parameter auszuwählen, wobei die mehreren Parameter eine Mittenposition, eine Amplitude und eine dimensionsbezogene Standardabweichung umfassen, komprimierte Wetterradar-Anzeigedaten auf der Basis der ausgewählten Parameter zu erzeugen, und
einen Sender/Empfänger (134) in Signalkommunikation mit der Verarbeitungseinrichtung (112), wobei der Sender/Empfänger (134) dafür ausgelegt ist, die komprimierten Wetterradar-Anzeigedaten von der Verarbeitungseinrichtung (112) zu empfangen und die komprimierten Wetterradar-Anzeigedaten von dem Flugzeug (102) zu übermitteln.

**7.** System nach Anspruch 6, ferner umfassend:

ein neuronales Netzwerk (132),
wobei die Verarbeitungseinrichtung (112) ferner dafür ausgelegt ist, das neuronale Netzwerk (132) dafür zu trainieren, langfristige Turbulenzinformationen auf der Basis von kurzfristigen Radarreflektivitätsdaten, die zum Bestimmen von kurzfristiger Turbulenz verwendet werden, und auf der Basis von langfristigen Radarreflektivitätsdaten vorherzusagen, und
wobei die vorhergesagten Turbulenzdaten von dem Flugzeug (102) übermittelt werden.

**8.** System nach Anspruch 7,
wobei die Verarbeitungseinrichtung (112) ferner für Folgendes ausgelegt ist:

Zerlegen von Radarreflektivitätsdaten in kurzfristigen Distanzen in mehrere adaptive dreidimensionale Gaußsche Komponentenfunktionen, die Wetterinformationen und Turbulenzinformationen entsprechen; und
Zerlegen der Turbulenzdaten in langfristigen Distanzen in mehrere adaptive dreidimensionale Gaußsche Komponentenfunktionen und
wobei das neuronale Netzwerk (132) die Turbulenzinformationen in den langfristigen Distanzen auf der Basis der bestimmten langfristigen mehreren adaptiven dreidimensionalen Gaußschen Komponentenfunktionen vorhersagt.

## Revendications

**1.** Procédé pour communiquer des données d'affichage radar météorologique comprimées depuis un aéronef (102) vers d'autres aéronefs et/ou des stations au sol, le procédé comprenant les étapes consistant à :

recevoir, dans un dispositif de traitement (112), des données de réflectivité radar depuis un système radar météorologique embarqué (104) conçu pour générer des données de réflectivité radar depuis l'aéronef (102) ;

décomposer les données de réflectivité radar reçues en une pluralité de fonctions composantes gaussiennes adaptatives ;

sélectionner une pluralité de paramètres, laquelle pluralité de paramètres comprend une position centrale, une amplitude et un écart-type dimensionnel ;

générer les données d'affichage radar météorologique comprimées à partir des paramètres sélectionnés, et communiquer les données d'affichage radar météorologique comprimées depuis l'aéronef (102).

**2.** Procédé selon la revendication 1, comprenant en outre les étapes consistant à :

recevoir les données d'affichage radar météorologique comprimées depuis l'aéronef (102) au niveau d'une station au sol (140) et/ou d'un autre aéronef (138) ;

générer des données d'affichage radar météorologique à partir des données d'affichage radar météorologique comprimées en fonction des fonctions composantes gaussiennes décomposées.

**3.** Procédé selon la revendication 1, dans lequel l'étape consistant à décomposer les données de réflectivité radar reçues en une pluralité de fonctions composantes gaussiennes adaptatives repose sur une fonction de base gaussienne tridimensionnelle définie par :

$$f(x',y',z') = \frac{1}{(2\pi)^{3/4}\sqrt{\sigma_x\sigma_y\sigma_z}} \exp\left(-\frac{x'^2}{4\sigma_x^2} - \frac{y'^2}{4\sigma_y^2} - \frac{z'^2}{4\sigma_z^2}\right).$$

**4.** Procédé selon la revendication 1, dans lequel les données de réflectivité radar reçues sont des données de réflectivité radar tridimensionnelles, et comprenant en outre l'étape consistant à :

décomposer les données de réflectivité radar tridimensionnelles reçues en une pluralité de fonctions composantes gaussiennes tridimensionnelles adaptatives.

**5.** Procédé selon la revendication 4, dans lequel les données de réflectivité radar tridimensionnelles reçues sont des données de réflectivité radar tridimensionnelles à court terme et des données de réflectivité radar tridimensionnelles à long terme au-delà de 40 milles marins (nm), et comprenant en outre les étapes consistant à :

décomposer les données de réflectivité radar tridimensionnelles à court terme et à long terme en la pluralité de fonctions composantes gaussiennes tridimensionnelles adaptatives ;

établir des données de turbulence à partir des données de réflectivité radar tridimensionnelles à court terme ;

décomposer les données de turbulence en une pluralité de fonctions composantes gaussiennes tridimensionnelles adaptatives ; et

communiquer les données de turbulence décomposées.

**6.** Système apte à communiquer des données d'affichage radar météorologique comprimées depuis un aéronef (102) vers d'autres aéronefs et/ou des stations au sol, le système comprenant :

un système radar météorologique embarqué (104) conçu pour générer des données de réflectivité radar à partir d'objets météorologiques (130) ;

un dispositif de traitement (112) en communication par signaux avec le système radar météorologique (104), lequel dispositif de traitement (112) est conçu pour recevoir les données de réflectivité radar depuis le système radar météorologique (104), pour décomposer les données de réflectivité radar reçues en une pluralité de fonctions composantes gaussiennes adaptatives, pour sélectionner une pluralité de paramètres, laquelle pluralité de paramètres comprend une position centrale, une amplitude et un écart-type dimensionnel, pour générer des données d'affichage radar météorologique comprimées à partir des paramètres sélectionnés, et

un émetteur-récepteur (134) en communication par signaux avec le dispositif de traitement (112), lequel émetteur-récepteur (134) est conçu pour recevoir les données d'affichage radar météorologique comprimées depuis le dispositif de traitement (112) et pour communiquer les données d'affichage radar météorologique comprimées depuis l'aéronef (102).

**7.** Système selon la revendication 6, comprenant en outre :

un réseau neuronal (132),
lequel dispositif de traitement (112) est en outre conçu pour former le réseau neuronal (132) de manière à lui faire prédire des informations de turbulence à long terme en fonction de données de réflectivité radar à court terme utilisées pour établir une turbulence à court terme et en fonction de données de réflectivité radar à long terme, et lesquelles données de turbulence prédites sont communiquées depuis l'aéronef (102).

**8.** Système selon la revendication 7, dans lequel le dispositif de traitement (112) est en outre conçu pour :

décomposer des données de réflectivité radar à des distances à court terme en une pluralité de fonctions composantes gaussiennes tridimensionnelles adaptatives correspondant à des informations météorologiques et des informations de turbulence ; et
décomposer les données de turbulence à des distances à long terme en une pluralité de fonctions composantes gaussiennes tridimensionnelles adaptatives, et
lequel réseau neuronal (132) prédit les informations de turbulence aux distances à long terme en fonction de la pluralité de fonctions composantes gaussiennes tridimensionnelles adaptatives à long terme établies.

EP 2 267 480 B1

FIG. 1

12

**Reflectivity Analysis**

**FIG.2A**

**Turbulence Analysis**

**FIG.2B**

**One-dimensional Reflectivity**

**FIG.2C**

**One-dimensional Turbulence**

**FIG.2D**

EP 2 267 480 B1

FIG. 3

$Z'$

$Z$

$(x_c, y_c, z_c)$

$Y'$

$Y$

$\theta$

$X'$

$X$

**FIG. 4**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **MONTOPOLI, M et al.** Maximum-Likelihood Retrieval of Modeled Convective Rainfall Patterns from Midlatitude C-Band Weather Radar Data. *IEEE Transactions on Geoscience and Remote Sensing,* July 2007, vol. 45 (7), ISSN 0196-2892, 2403-2416